# EUROPEAN PATENT SPECIFICATION

(11) **EP 2 282 050 B1**
(45) Date of publication and mention of the grant of the patent: **16.03.2016**
(21) Application number: 09008587.9
(22) Date of filing: 30.06.2009
(51) Int. Cl.: F03D 1/00

(54) **Method to inspect a wind turbine blade**
Verfahren zur Inspektion einer Windturbinenschaufel
Procédé d'inspection de pale d'éollienne

(43) Date of publication of application: 09.02.2011
(73) Proprietor: Siemens Aktiengesellschaft, 80333 München (DE)
(72) Inventor: Stiesdal, Henrik, 5000 Odense C (DK); Wolf, Erik, 91341 Röttenbach (DE)

(56) References cited:
- DE-A1- 4 317 835
- US-A- 4 422 177
- US-A- 5 119 408
- US-A1- 2005 041 771
- US-B1- 6 459 760
- PFEIFER ET AL: "COMPUTED TOMOGRAPHY OF ADVANCED COMPOSITE MATERIALS" ADVANCED COMPOSITE MATERIALS, VSP / BRILL ACADEMIC PUBLISHERS, LEIDEN, NL, 1 December 1985 (1985-12-01), pages 177-188, XP008079948 ISSN: 0924-3046

## Description

The invention relates to a method to determine the quality of a blade, especially of a wind-turbine-blade.

Blades, especially wind-turbine-blades, are built up by the help of composite materials, because this allows to achieve a significant mechanical strength and a reduced weight.

Wind-turbine-blades are manufactured preferably by the use of a so called "Vaccuum-Assisted-Resin-Transfer-Method, VARTM". To assure the quality of the blade it is necessary to reduce or even avoid failures during the production-process, as these failures may result in a reduced life time of the blade or even in a final rejection of the produced blade.

The VARTM is used to create a composite structure by help of a vacuum. The vacuum is applied to components of the blade, while the components are located into a closed mould. Vacuum is applied to the closed mould, so a resin like epoxy is brought into the closed mould to penetrate the components.

The used blade-components may be pre-assembled. It is also possible to stack blade-components onto a lower mould in a sandwich-buildup to get a finished blade-structure. Next an upper mould is brought onto the blade-structure and is attached to the lower mould.

Faults during the VARTM-process itself or even faults related to the blade-components may result in local defects, Leading to possible failure points of the blade.

It is possible to detect defects of the blade by a visual inspection. In this case only defects at the surface of the blade can be detected, because of the cured resin it is not possible to detect defects, which are between the blade-layers.

Additionally this detection-method is dependant to the personal, doing the visual inspection.

It is also difficulty to document the detected faults, as used photography cannot reveal fault-details compared to the human eye.

It is also possible to detect defects of the blade by an ultra-sound-inspection. This inspection is time-consuming and needs a high effort as a wind-turbine-blade show a length of up to 50 meters and beyond.

Due to the time constrains and due to economic considerations only most critical areas of the blade are inspected.

Additionally ultrasonic-inspection can not be used to determine an orientation of fibers, used inside the blade, in an accurate manner. As the fiber-orientation accounts most to the blade characteristics, this is a major drawback of this method.

Right now even X-ray based methods were performed to blades. The used systems are complicated and they are limited to sections of the blade only. Therefore this systems are not suitable.

Document US 5,119,408 A discloses a "CT X-ray inspection" of a large object. The transmitter and the receiver stay fixed while the object is turned around for the measurement.

Document DE 43 17 835 A1 discloses a "computertomograph". The transmitter and the receiver of the computertomograph stay fixed while the object is turned around for the measurement.

Document US 2005/041771 A refers to a "CT cone beam algorithm". The transmitter and the receiver stay fixed while the object for the measurement is turned around.

Document "Computer tomography of advanced composite materials", Pfeifer et al., advanced composite materials, VSP / BRILL AcademicPublishers, Leiden, NL, 01.12.1985 (1985-12-01), pages 177 - 188, XP008079948, ISSN 0924-3046, discloses a "CT for aerospace structures". The transmitter and the receiver are fixed while the object for the measurement is turned around.

Document US 4,422,177 A discloses a "CT slice ...rotary table". A X-ray source is used and is fixed together with the detector while the object for the measurement is turned around.

It is therefore the aim of the invention to provide an improved method for blade-inspection, which is especially applicable for a blade of a wind-turbine.

According to the invention relevant sections or parts of the blade are inspected by a method, which is based on computer-tomography (CT).

According to the invention as defined in claim 1, at least parts of a wind-turbine-blade, is inspected by using a computer-tomography-method. This method uses a kind of radiation, which is directed through the blade for the inspection. A transmitter sends the radiation through the blade. A receiver receives the sent radiation after its passing through the blade. The position of the transmitter, of the receiver and/or of the blade is changed in relation to each other, to perform the inspection of the blade.

The CT-technology uses a penetrating radiation like x-ray for the blade-inspection.

To generate this radiation an accelerator or a nuclide source may be used.

By help of a steering-system the radiation is directed through the blade. This might be done in form of a single beam or a number of beams, which might overlap to be shaped like a fan.

In this case the beam(s) is (are) swept through the blade while the inspection is done.

A used receiver-unit may comprise a "charge coupled device, CCD" or a similar device to generate a number of images, while each image is related to a certain cross-section of the blade.

As the radiation will be damped in dependency of the error type and its size the damping is used to generate the image. According to this the receiver receives the radiation with different intensities by help of a sensor array.

By help of a post-processing-method an evaluation of quality differences of the blade and its composite is established.

By help of an algorithm, which detects certain patterns at the images, a quality-issue of the material can be found automatically.

The inventive method allows a 100% proof of the whole blade, while the blade-inspection is done in a single testing-passage in a preferred embodiment.

For this the position of the receiver and/or of the radiation source and/or of the blade are changed in relation to each other to inspect the blade.

For example the receiver and the source may be rotated in an orbit around the blade for the inspection.

It is also possible to change the position of the receiver and/or the source in a linear way along dedicated lines to allow the inspection of the blade.

It is also possible to use an array of N radiation-sources and/or an array of M receivers. In this case it would be possible to fix their positions and to use a NxM matrix to describe mathematically their relationship while the blade inspection.

A localizer-unit is used to provide information about the inspected cross-section of the blade (for example it provides angle and transversal location and depth of the field).

An electronic processing unit translates a variation of received intensity and of a location pointer into a data set or into a signal, which will be used to visualize the image as described above.

The image allows a high-qualitative inspection of the composite material of the blade and also to determine a location of defects.

The invention allows a 100% inspection of the blade and a visualization of an inner and an outer blade-structure, even in a 3D-view.

In a preferred embodiment at least one emitting and a number of receiving devices are used for the inspection. This improves the quality and/or to reduce the needed time for the blade-inspection

In another preferred embodiment the intensity of the radiation is modulated to improve the visualization.

To improve the visualization it is also possible to align the tilt-angle of the emitting/receiving devices in reference to the blade. This allows an optimization of the penetration of the radiation, especially usable for the inspection of thick parts of the blade.

In a preferred embodiment an optional indicator-unit is coupled with the inspection-system. It is used to mark relevant fault-areas for a further post-processing of the blade.

In a preferred embodiment an optional preparation unit is used, which prepares the marked areas for subsequent steps of work - for a repair for example. For example the preparation unit removes fault blade-material.

In a preferred embodiment an optional repair unit is used to repair the fault areas. This repair-unit comprises for example tools like grinders, milling cutters or similar to be used for the preparation of the fault-area.

In a preferred embodiment the rotation movement of the emitting/receiving-devices around the blade is replaced by a linear-transversal movement of the devices in reference to the blade.

In a preferred embodiment the inspection-system is arranged as a mobile unit to allow a blade-inspection at certain different sites.

The invention will be shown by help of a drawing now.
- FIG 1: shows a first inspection-method of a blade according to the invention, and
- FIG 2: shows a second inspection-method of a blade according to the invention.

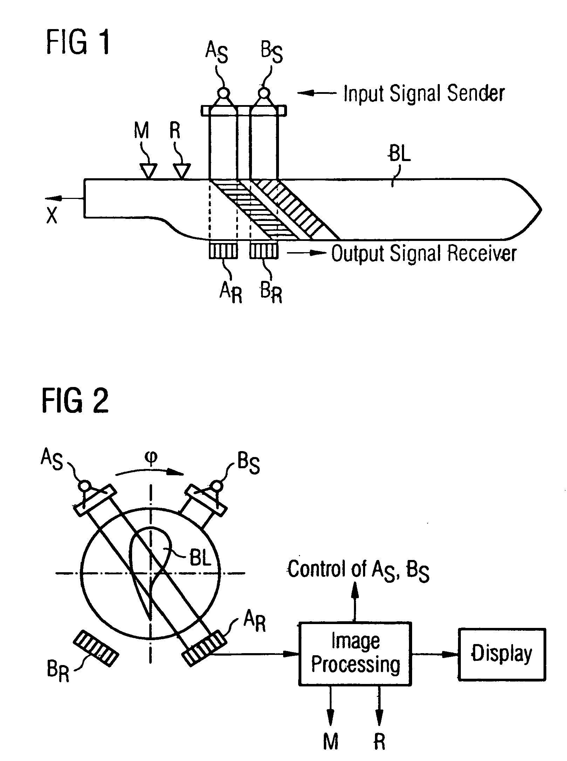

For FIG 1 and FIG 2 the following abbreviations are used:
- BL: as blade,
- AS, BS: as sender or transmitters,
- AR, BR: as receiver,
- x: as axial position,
- ϕ: as circumferential position,
- M: as marking unit and
- R: as repair and preparation unit.

FIG 1 shows a first inspection-method of a blade according to the invention.

According to the invention relevant sections or parts of the blade BL are inspected by a computer-tomography based method.

A first sender AS and a second sender BS are sending a kind of radiation through the blade BL for the inspection.

As radiation x-ray is used for the blade-inspection. The radiation is directed by help of a steering-system.

A first receiver AR and a second receiver BR are receiving the radiation after it passed through the blade BL.

The position of the senders AS, BS and of the receivers AR, BR are changed in relation to each other, to perform the in-section of the blade BL.

In this case the position of the receivers AR, BR and/or of the senders AS, BS are changed in a linear way along dedicated lines to allow the inspection of the blade BL.

In this case two beams are used, which are swept through the blade BL while the inspection is done.

The output signals of the receivers AR, BR are guided to a image-processing-unit (not shown here) for further evaluation. By help of a post-processing-method an evaluation of quality differences of the blade BL and its composite is established.

By help of an algorithm, which detects certain patterns at the images, a quality-issue of the material can be found automatically.

As described above a marking unit M and a repair and preparation unit R is used to mark and repair damages.

The input-signals of the senders AS, BS are created by help of a signal-unit (not shown here). For example an accelerator or a nuclide source is used to generate the radiation.

FIG 2 shows a second inspection-method of a blade according to the invention.

Here the position of the receivers AR, BR and/or of the senders AS, BS are changed in relation to each other to inspect the blade BL. They are rotated by an angle ϕ in a circumferential manner. They are rotated in an orbit around the blade BL for the inspection.

The output-signals of the receivers AR, BR are passed to an image processing unit and to a display for further evaluations.

The image processing unit creates signals for the marking unit M and for the repair and preparation unit R.

It further creates signals to control the senders AS, BS.

## Claims

1. Method to inspect a blade (BLL) of a wind-turbine,
- where at least parts of the blade are inspected by a computer-tomography-method using radiation,
- where the radiation is directed through the blade for the inspection,
- where a transmitter (A_{S},B_{S}) sends the radiation through the blade,
- where a receiver (A_{R},B_{R}) receives the sent radiation after its passing through the blade,
- where the position of the transmitter, of the receiver and/or of the blade is changed in relation to each other, to perform the inspection of the blade,
- where a tilt-angle of the transmitter and/or of the receiver in reference to the blade is adjusted to improve the results of the inspection.

2. Method according to claim 1, where the radiation is directed and guided in form of a beam or of a number of beams through the blade.

3. Method according to claim 2, where the at least one beam is directed through the blade at a certain cross-section of the blade.

4. Method according to claim 1, where the transmitter and the receiver are rotated in an orbit around the blade for the inspection.

5. Method according to claim 1, where the transmitter and the receiver are partially rotated in an orbit around the blade for the inspection.

6. Method according to claim 1, where the transmitter and the receiver are moved linear-transversal in relation to the blade for the inspection.

7. Method according to one of the claims 1 to 6, where the transmitter comprises a number of N single transmitters and/or where the receiver comprises a number of M single receivers, which are coupled in form of a NxM matrix.

8. Method according to claim 1,
- where a CCD-device is used as receiver to generate images, which are related to certain cross-sections of the blade, and/or
- where a localizer-unit is used to provide information related to the position of the inspected cross-section.

9. Method according to claim 8, where the images are evaluated by a post-processing-method, used to determine quality differences of the blade.

10. Method according to claim 8 or 9, where an algorithm is used to detect certain fault-patterns at the images.

11. Method according to claim 1, where the intensity of the radiation is modulated during the inspection to improve the results of the inspection.

12. Method according to claim 1,
- where an indicator-unit is used to mark detected fault-areas of the blade, and
- where a preparation-unit is used to prepare the marked areas for a subsequent repair, and
- where a repair-unit is used to repair the fault areas, using tools like grinders and milling cutters.

## Patentansprüche

1. Verfahren zum Prüfen eines Blatts (BL) einer Windturbine,
- bei dem zumindest Teile des Blatts durch ein Computertomografieverfahren unter Verwendung von Strahlung geprüft werden,
- bei dem die Strahlung für die Prüfung durch das Blatt gerichtet wird,
- bei dem ein Sender (A_{S}, B_{S}) die Strahlung durch das Blatt sendet,
- bei dem ein Empfänger (A_{R}, B_{R}) die gesendete Strahlung empfängt, nachdem sie durch das Blatt geleitet wurde,
- bei dem die Position des Senders, des Empfängers und/ oder des Blatts in Bezug zueinander zwecks Prüfen des Blatts verändert wird,
- bei dem ein Neigungswinkel des Senders und/ oder des Empfängers in Bezug zum Blatt zwecks Verbessern der Ergebnisse der Prüfung justiert wird.

2. Verfahren nach Anspruch 1, bei dem die Strahlung in Form eines Strahls oder einer Anzahl Strahlen durch das Blatt gerichtet und geleitet wird.

3. Verfahren nach Anspruch 2, bei dem mindestens ein Strahl an einem bestimmten Querschnitt des Blatts durch das Blatt gerichtet wird.

4. Verfahren nach Anspruch 1, bei dem der Sender und der Empfänger für die Prüfung in einer Kreisbahn um das Blatt gedreht werden.

5. Verfahren nach Anspruch 1, bei dem der Sender und der Empfänger für die Prüfung in einer Kreisbahn teilweise um das Blatt gedreht werden.

6. Verfahren nach Anspruch 1, bei dem der Sender und der Empfänger für die Prüfung in Bezug zum Blatt linear-transversal bewegt werden.

7. Verfahren nach einem der Ansprüche 1 bis 6, bei dem der Sender eine Anzahl N einzelner Sender und/ oder der Empfänger eine Anzahl M einzelner Empfänger umfasst, die in Form einer NxM-Matrix verknüpft sind.

8. Verfahren nach Anspruch 1,
- bei dem ein CCD-Bauelement als Empfänger zum Erzeugen von Bildern benutzt wird, die bestimmte Querschnitte des Blatts betreffen, und/ oder
- bei dem eine Lokalisierereinheit zum Bereitstellen von Informationen benutzt wird, die die Position des geprüften Querschnitts betreffen.

9. Verfahren nach Anspruch 8, bei dem die Bilder durch ein Nachverarbeitungsverfahren beurteilt werden, das zum Bestimmen von Qualitätsunterschieden am Blatt benutzt wird.

10. Verfahren nach Anspruch 8 oder 9, bei dem zum Erkennen bestimmter Fehlermuster in den Bildern ein Algorithmus benutzt wird.

11. Verfahren nach Anspruch 1, bei dem die Intensität der Strahlung bei der Prüfung angepasst wird, um die Ergebnisse der Prüfung zu verbessern.

12. Verfahren nach Anspruch 1,
- bei dem eine Anzeigeeinheit zum Markieren erkannter Fehlerbereiche des Blatts benutzt wird und
- bei dem eine Vorbereitungseinheit zum Vorbereiten der markierten Bereiche für eine nachfolgende Reparatur benutzt wird und
- bei dem eine Reparatureinheit zum Reparieren der Fehlerbereiche unter Verwendung von Werkzeugen wie Schleif- und Fräsmaschinen benutzt wird.

## Revendications

1. Procédé d'inspection d'une pale (BL) d'une éolienne,
- où au moins des parties de la pale sont inspectées par un procédé de tomodensitométrie utilisant un rayonnement,
- où le rayonnement est dirigé à travers la pale pour l'inspection,
- où un émetteur (A_{S}, B_{S}) envoie le rayonnement à travers la pale,
- où un récepteur (A_{F}, B_{R}) reçoit le rayonnement envoyé après son passage à travers la pale,
- où la position de l'émetteur, du récepteur et/ou de la pale est changée l'un par rapport à l'autre, pour exécuter l'inspection de la pale,
- où un angle d'inclinaison de l'émetteur et/ou du récepteur en référence à la pale est ajusté pour améliorer les résultats de l'inspection.

2. Procédé selon la revendication 1, où le rayonnement est dirigé et guidé sous la forme d'un faisceau ou d'un certain nombre de faisceaux à travers la pale.

3. Procédé selon la revendication 2, où l'au moins un faisceau est dirigé à travers la pale au niveau d'une certaine section transversale de la pale.

4. Procédé selon la revendication 1, où l'émetteur et le récepteur sont tournés selon une orbite autour de la pale pour l'inspection.

5. Procédé selon la revendication 1, où l'émetteur et le récepteur sont partiellement tournés selon une orbite autour de la pale pour l'inspection.

6. Procédé selon la revendication 1, où l'émetteur et le récepteur sont déplacés de façon linéaire transversale par rapport à la pale pour l'inspection.

7. Procédé selon l'une des revendications 1 à 6, où l'émetteur comprend un nombre de N émetteurs simples et/ou où le récepteur comprend un nombre de M récepteurs simples, qui sont couplés sous la forme d'une matrice NxM.

8. Procédé selon la revendication 1,
- où un dispositif CCD est utilisé comme récepteur pour générer des images, qui sont liées à certaines sections transversales de la pale, et/ou
- où une unité de localisateur est utilisée pour fournir des informations liées à la position de la section transversale inspectée.

9. Procédé selon la revendication 8, où les images sont évaluées par un procédé de post-traitement, utilisé pour déterminer des différences de qualité de la pale.

10. Procédé selon la revendication 8 ou 9, où un algorithme est utilisé pour détecter certains motifs d'anomalie au niveau des images.

11. Procédé selon la revendication 1, où l'intensité du rayonnement est modulée lors de l'inspection pour améliorer les résultats de l'inspection.

12. Procédé selon la revendication 1,
- où une unité d'indicateur est utilisée pour marquer des zones d'anomalie détectées de la pale, et
- où une unité de préparation est utilisée pour préparer les zones marquées pour une réparation subséquente, et
- où une unité de réparation est utilisée pour réparer les zones d'anomalie, en utilisant des outils tels que des meuleuses et des fraises.
